# EUROPEAN PATENT SPECIFICATION

(11) **EP 3 530 521 B1**
(45) Date of publication and mention of the grant of the patent: **29.07.2020**
(21) Application number: 18465503.3
(22) Date of filing: 22.02.2018
(51) Int. Cl.: B60R 1/00

(54) **DRIVER ASSISTANCE METHOD AND APPARATUS**
FAHRASSISTENZVERFAHREN UND -VORRICHTUNG
PROCÉDÉ ET APPAREIL D'ASSISTANCE AU CONDUCTEUR

(43) Date of publication of application: 28.08.2019
(73) Proprietor: Continental Automotive GmbH, 30165 Hannover (DE)
(72) Inventor: Son, Andrei, 300702 Timisoara (RO); Padiri, Bhanu Prakash, 560037 Bangalore (IN); Singh, Ankit, 560100 Bengaluru (IN); Ambekar, Tejas, 560100 Bangalore (IN)
(74) Representative: Bobbert, Christiana

(56) References cited:
- EP-A1- 2 851 864
- EP-A2- 1 283 406
- GB-A- 2 472 773
- US-A1- 2016 350 601

## Description

### TECHNICAL FIELD

The present disclosure relates to methods and apparatus for assisting in the driving of a vehicle.

### BACKGROUND

Modern vehicles are frequently equipped with various electronic systems intended to assist a driver in the driving of a vehicle. Such driver assistance systems involve the use of one or more sensors such as camera, radar, lidar, ultrasonic and infrared sensors which are operable to detect information about the external environment of a vehicle. The information collected by the sensors are used to provide various driving assistance functions such as emergency brake assist, lane departure warning, blind spot detection, pedestrian and road departure protection. Some driver assistance systems also partially or fully take control of the vehicle providing functionality such as adaptive cruise control, parking assist, autonomous or highly-autonomous vehicle guidance.

However, in order for a driver assistance systems to effectively assist a driver, data collected by the automotive sensors must be accurate under different types of driving conditions. Unfortunately, automotive sensors do have limitations in that they may not work well under certain conditions. For example, camera image recognition systems are capable of providing colour, contrast and optical character recognition. However, camera systems do not work well under low light levels and poor visibility conditions. Radar and ultrasonic sensors, on the other hand, work well in low light conditions but do not have the imaging and colour capabilities provided by a camera.

Document EP2851864A1 discloses a display method and device according to the preambles of claims 1 and 11 for a vehicle, where a superimposed image is generated by superimposing an image in an area in the extracted superimposition image corresponding to the superimposed area on the captured image. In US2016/030601A1 a system and method are provided having sensing unit(s) and a processing unit, wherein the processing unit enhances captured images with stored imaging data.

Document GB2472773A shows a road vehicle contact-analogue head up display that comprises a virtual image generation system, a system for sensing a lateral road position, a symbol image generation system and an imagery processor. Document EP1283406A1 discloses an image processing apparatus for a vehicle having amongst others an image synthesizing device which combines a first model-like image with a recorded image of the surroundings.

Various solutions have been proposed such as using a fusion of data obtained from different sensors to supplement deficiencies from another sensor. However, such solutions do not sufficiently assist a driver who has to drive through adverse driving conditions with low lighting, visibility or water hazards.

### SUMMARY

Aspects of this disclosure provide methods and apparatus for assisting in the driving of an own vehicle by generating a composite image comprising a current representation of objects in an external environment of the vehicle combined with at least one stored static structure image.

A first aspect of this disclosure provides a method for assisting in the driving of a vehicle comprising receiving, by a driver assistance unit, a current geographical location of the vehicle and providing a current representation of objects in an external environment of the vehicle based on substantially real-time sensor data of objects acquired by an environment module comprising one or more environment sensors. The current representation corresponding to the current geographical location of the vehicle. The objects may include static and non-static objects. In this disclosure, static objects refer to permanent or semi-permanent structures such as buildings, roads, road markings, construction sites and closed lanes as well as static hazards such as drains and potholes. Moving objects such as traffic participants as well as temporarily stationary objects such as parked vehicles are dynamic and do not constitute static objects. The current representation may comprise one or more images derived from substantially real-time sensor data acquired by one environment sensor or a fusion of substantially real-time sensor data from a plurality of environment sensors. The current representation may also be in the form of a list of objects or object list including information on the objects such as their co-ordinates, classification, geometry and other characteristics. Examples of environment sensors which may be used include cameras, stereo cameras, radar sensors, lidar sensors, ultrasonic sensors or a combination thereof. The environment sensors may be located on-board the vehicle or remote from it such as on another vehicle, an unmanned aerial vehicle, at a traffic junction/building or a cloud server. The driver assistance unit retrieves a stored video comprising at least one static structure image of the vehicle external environment, the stored video having a geographical location matching the current geographical location of the vehicle. Static structure images refer to images which only contain static objects. The driver assistance unit then generates a composite video comprising one or more composite images by combining the current representation with the at least one static structure image in the stored video. The composite video is displayed to a driver of the vehicle.

As discussed earlier, reliance on automotive sensors alone to guide a driver through bad driving conditions is not entirely satisfactory due to limitations in sensor capabilities. In this disclosure, the driving of an own vehicle may be assisted by displaying to a driver of a vehicle a composite video comprising a current representation of objects in an external environment of the vehicle combined with a least one static structure image of the vehicle environment. Static structure images show to the driver where the static, that is, permanent or semi-permanent structures in the vehicle external environment are located. These static structures may be concealed from driver due to water hazards such as flood or snow and/or they may not be clearly visible due to low lighting conditions or poor visibility caused by e.g. fog, snow or heavy rain. Furthermore, automotive sensors have their limitations and may have difficulty either detecting obscured obstacles and/or detecting objects under certain environmental conditions. Accordingly, a safer driving environment is created by increasing driver awareness about the presence of obstacles and road hazards.

In some implementations, the current representation may comprise information on traffic participants in the vehicle external environment. The traffic participant information may be derived by analysing sensor data from one or more environment sensors. For example, it may be extracted based on a fusion of the camera module and radar sensor data. In another optional implementation, road feature information may also be retrieved from a map database and featured as part of the composite video. Road feature information refers to information (e.g. location and dimensions) regarding one or more types of static or permanent objects on the road such as traffic lights, traffic signs, intersections lane markings, road boundaries, road works, closed lanes and curbs. The retrieved road feature information may be introduced as part of the current representation or added to a composite video before it is displayed. The presence of traffic participant and/or road feature information further enhances a driver's information about his environment and including awareness about the presence of dynamic and road feature obstacles which may not be clearly visible to him.

The stored video may be retrieved real time from an image database containing a plurality of stored videos or pre-fetched from the image database and stored in the buffer before the vehicle arrives at the current geographical location. In the latter case, the stored video may be retrieved from a buffer comprising a plurality of videos having a geographical location matching a projected geographical location of the vehicle based on a predefined driving route. Pre-fetching stored videos and storing them in a buffer advantageously reduces the lag time for generating a composite video.

According to the invention, the method for assisting in the driving of a vehicle may further comprise receiving by the driver assistance unit, driving conditions related sensor data about the vehicle external environment that is acquired by the environment module. The driver assistance unit determines driving conditions for the vehicle associated with the vehicle external environment based at least partially on the driving conditions related sensor data. Examples of environment sensors capable of acquiring sensor data indicative of driving conditions include rain sensors, light sensors, cameras, lidar sensors, infrared sensors or a combination thereof. Apart from driving conditions related sensor data, the driver assistance unit may also determine driving conditions based additionally or alternatively on other sources of information such as vehicle clocks and weather reports. The driver assistance unit may determine if driving conditions are bad and in response to driving conditions being determined as bad, initiate the retrieving of the stored video so that composite videos may be generated to assist a driver in the driving of the vehicle. Driving conditions may be assessed based on parameters such as whether it is day or night time, luminance level, visibility level, whether there are any water hazards such as flooding, ice or snow which may conceal the presence of road markings, traffic signs as well as hazards such as curbs, potholes and open drains. The driver assistance unit may make this determination by comparing the calculated driving conditions with predetermined threshold values stored in a memory of the driver assistance unit. The threshold values need not be fixed and may vary depending on factors such as identity and physiological state of a driver. The driver assistance unit may also classify the driving conditions according to a plurality of categories based on the sensor data. Alternatively or additionally, the retrieval of stored videos may also be manually activated by a driver of the vehicle who wishes to be assisted by having static structure images combined with a current representation.

In another exemplary implementation of this disclosure where a current representation comprises at least one image, the driver assistance unit may initiate an algorithm for extracting one or more static structure images from the current representation in response to the driving conditions not being determined as bad. The one or more extracted static structure images may be annotated with the geographical location associated with the current representation from which the one or more extracted static structure images originate and stored in an image database as a new stored video or used to update an existing stored video. This process advantageously updates the image database with more recent information on static objects situated in a location. For instance, new static objects not present in pre-existing videos stored in the database and static objects no longer in existence and need to be removed such as road works which have ceased and demolished structures.

In some implementations, generating the composite video may further comprise checking if the perspective view of the one or more static structure images in the stored video correspond to the perspective view of the current representation and adjusting the perspective view of the one or more static structure images to the perspective view of the current representationif they do not correspond. According to the invention, the transparency level of the one or more static structure images is also adjusted based on driving conditions for the vehicle. For example, the static structure images may be made more visible to the driver as driving conditions worsen by adjusting the pixels so that they are less transparent.

In another option, where the stored video comprises a plurality of static structure images and the current representation comprises a plurality of images, generating the composite video may further comprise comparing the velocity of changing landscape associated with the current representation and the stored video and determining based on any difference in velocity whether to do at least one of adjusting a rendering rate of the static structure images from the stored video, repeating and/or disregarding one or more of the static structure images in the stored video from the generation of the composite video. This option may be useful when the velocity of changing landscape for the current representation (which is equivalent to the vehicle velocity if onboard sensors are used for capturing the current video) is much slower or faster than that associated with the stored video. For example, when the landscape in a current representation does not change very often, one or more static structure images from the stored video may need to be repeated or rendered at a low frames-per-second (FPS). Conversely, when the velocity of changing landscape for the current representation is much faster (for example, because the vehicle is travelling at high speed), one or more of the static structure images from the stored video may have to be rendered at a high FPS or disregarded. For example, in some implementations, it may be possible to have only alternate static structure image frames in a stored video form part of the composite video without much loss of information thereby reducing computational demands associated with composite video generation.

Another aspect of the disclosure provides a driver assistance unit comprising a processor and at least one memory coupled to the processor. The at least one memory stores instructions executable by the processor causing the processor to receive a current geographical location of the vehicle, and receive or generate a current representation of objects in an external environment of the vehicle based on substantially real-time sensor data of objects acquired by an environment module comprising one or more environment sensors. The current representation corresponding to the current geographical location of the vehicle. The memory further causes the processor to retrieve a stored video comprising at least one static structure image of the vehicle external environment, the stored video having a geographical location matching the current geographical location of the vehicle. The memory also further causes the processor to generate a composite video which includes but is not limited to combining the current representation with the at least one static structure image in the stored video and causing the display of the composite video to a driver of the vehicle. In some implementations of this disclosure, the composite video may comprise information on traffic participants in the vehicle external environment and road feature information.

As with the first aspect of this disclosure the objects in the current representation may comprise static and non-static objects. The one or more environment sensors in the environment module which may also be located on-board the vehicle or remotely. Examples of such environment sensors include cameras, stereo cameras, radar sensors, lidar sensors, ultrasonic sensors or a combination thereof. The one or more static structure images in the stored video show to the driver where the static structures in the vehicle external environment are located. These static structures may not be clearly visible or even concealed from the driver due to reasons such as poor visibility and water hazards. Automotive sensors may also have difficulty either detecting certain static objects under certain environmental conditions. Accordingly, a safer driving environment is created by increasing driver awareness about obstacles and road hazards.

In some implementations, the memory may cause the processor to receive driving conditions related sensor data acquired by the environment module about the vehicle external environment and determine driving conditions associated with the vehicle external environment based at least partially on the driving conditions related sensor data. The processor may also be further caused to determine if the driving conditions are bad; and initiate the retrieving of the stored video in response to the driving conditions being determined as bad.

The details of one or more implementations of the disclosure are set forth in the accompanying drawings and the description below. Other aspects, features, and advantages will be apparent from the description and drawings, and from the claims.

### BRIEF DESCRIPTION OF THE FIGURES

FIG. 1 is a schematic view of a system 100 comprising a driver assistance unit 140 according to one implementation of this disclosure.
FIG. 2 is an exemplary 3D mesh 200 associated with a surround view camera module.
FIG. 3A is a flow diagram illustrating a method for assisting in the driving of an own vehicle according to an exemplary first mode of operation.
FIG. 3B is a flow diagram illustrating a method for generating a composite video according to an exemplary implementation of this disclosure.
FIGS. 4A-4C are exemplary illustrations of an image from a current representation, static structure image combined with road feature information and a composite image formed based on overlaying the image from the current representation with the static structure image and road feature information respectively.

### DETAILED DESCRIPTION

In the following detailed description, reference is made to the accompanying figures. In the figures, similar symbols typically identify similar components, unless context dictates otherwise.

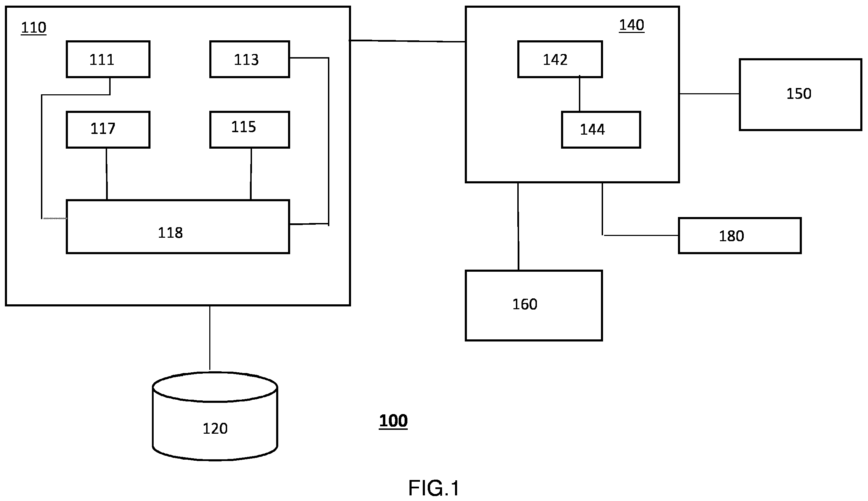

FIG. 1 shows a system 100 comprising a driver assistance unit 140 for a vehicle in accordance with one implementation of this disclosure. The system 100 comprises an environment module 110 in communication with the vehicle, a map database 120 in communication with the environment module 110, a driver assistance unit 140, an image database 150, a localization module 160 which tracks the geographical location of the vehicle and a display module 180.

The environment module 110 comprises one or more environment sensors operative to sense and collect information about static and/or non-static objects in an external environment of the vehicle. Static objects refer to permanent or semi-permanent structures such as buildings, roads, road markings, traffic signs, road dividers, construction sites and closed lanes as well as static hazards such as drains and potholes. In contrast, moving objects such as pedestrians, animals and moving vehicles as well as temporarily stationary objects such as parked vehicles are dynamic and do not constitute static objects. By way of example, environment sensors include perception sensors (e.g. visual and infrared cameras), ranging sensors (e.g. radar, lidar, ultrasonic sensors) and thermal imaging sensors. Further, the environment sensors in the environment module 110 maybe also located on-board the vehicle itself and/or remotely such as on another vehicle, an unmanned aerial vehicle, at a traffic junction/building or cloud server with sensor data being communicated wirelessly for example via Vehicle-to-X or radio frequency communication.

In the implementation of FIG. 1, the environment module 110 comprises environment sensors in the form of a rain sensor 111, a light sensor 113, a camera module 115 and a radar sensor 117. By way of example, the camera module 115 may comprise a forwarding facing camera mounted at the front of the vehicle or a surround view camera system with cameras mounted at different locations of the vehicle to provide a 360 degree street view for a driver of the vehicle when the camera images are stitched together. The camera module 115 may also comprise additionally or in the alternative, imaging sensors located remotely such as on another vehicle, on an unmanned aerial vehicle, at a traffic junction/building and/or a cloud server. The radar sensor 117 may comprise a short range or long range radar sensor or a combination thereof, these sensors being located on-board the vehicle and/or remotely. The environment sensors in the FIG. 1 implementation are deployed to provide two types of environment sensor output. The first type of output is substantially real-time sensor data of objects in the vehicle's external environment and the second is driving conditions related sensor data which will be used by the driver assistance unit 140 to determine driving conditions imposed by the vehicle external environment. The same sensor data from a single environment sensor may be capable of fulfilling both functions. For example, vision images from a camera may be used both to provide substantially real-time sensor data of objects such as traffic participants and obstacles in a vehicle external environment and at the same time detect driving conditions such e.g. whether it is day or night time and the presence of falling snow or water hazards. The environment module 110 also comprises a processing unit 118 in communication with the environment sensors and which is primarily responsible for the operation of the environment module 110. The processing unit 118 may be configured to amongst others provide instructions to the environment sensors, process and analyse sensor data collected by the environment sensors and communicate with external entities such as a map database 120 and the driver assistance module 140. It is to be appreciated that other combinations of environment sensors operable to provide at least one of substantially real-time sensor data of objects in the vehicle external environment of the vehicle and optionally, sensor data indicative of driving conditions may also be suitable.

As mentioned above, the first type of sensor output provided by environment sensors in the environment module is substantially real-time sensor data of objects in the vehicle external environment. This sensor data is used to provide a current representation comprising static and non-static objects in the vehicle external environment. The current representation may be derived from sensor data acquired by one environment sensor (e.g. vision images from the camera module 115) or from a combination of sensor data acquired by multiple environment sensors. Utilizing sensor data from multiple environment sensors has the advantage of improving reliability in object detection and classification as the shortcomings of one sensor may be compensated by the sensing capabilities of another sensor. For example, radar sensors provide good data for object detection and tracking capabilities but are poor for object classification. On the other hand, images from vision-based systems are useful for object classification but image processing is generally demanding on computational resources. The current representation may comprise one or more images derived from substantially real-time sensor data acquired by one environment sensor or a fusion of substantially real-time sensor data from a plurality of environment sensors. The current representation may also take the form of an object list, that is, a list of objects including information on the objects such as their co-ordinates, classification, geometry and other characteristics.

In the FIG. 1 implementation, the processing unit 118 generates a current representation of objects based on substantially real-time sensor data of objects acquired by the camera module 115 and radar sensor 117. The current representation of objects is then transmitted to the driver assistance unit 140. It will be appreciated by a person skilled in the art that the current representation may also be generated by other modules associated with the vehicle such as the driver assistance unit 140 or a unit which performs object perception functions. Where sensor data is taken from multiple environment sensors, the processing unit 118 may generate a current representation of objects by processing the output of each sensor independently before fusing them, that is, high level fusion. For example, sensor data from the camera module 115 and radar sensor may be processed to separately to generate individual object lists before merging them to derive the list of objects in the current representation. Low level fusion where raw sensor data from at least one environment sensor or sensor data at an early stage of processing is used by another sensor may also be deployed. For instance, in the FIG. 1 implementation, radar detections may be used to identify regions of interest (e.g. based on parametric curve analysis) in vision imagery from the camera module where image based object detection/classification should be focused. Additionally, a combination of high and low level fusion is also possible. For example, traffic participants (e.g. pedestrians, vehicles, cyclists and animals) may be identified and information about them may be extracted by low level fusion of camera and radar sensor data. Traffic participant information include information on the type of traffic participant, their location, their direction and speed of motion. In a low level fusion example, object classification and width information may be obtained from camera sensor data while speed and range may be derived from radar sensor data. Fusion algorithms which may be used include machine learning techniques. The extracted traffic participant information may then be combined with vision imagery from the camera module 115 and rendered as a current representation. It is to be appreciated that other types of environment sensors such as telematics services and ultrasonic sensors may also be used additionally or in the alternative to extract traffic participant information. Further, in other alternative implementations of this disclosure, processed sensor data from the environment sensors such as traffic participant information may not form part of a current representation but is instead added subsequently to a composite video generated by combining a current representation with a stored video. As discussed above, the environment sensors in the environment module 110 may also provide driving conditions related sensor data which is analysed by the driver assistance unit 140 to determine driving conditions associated with an external environment of the vehicle. By way of example, the rain sensor 111, light sensor 113 and the camera module 115 in the FIG. 1 implementation may be used to provide such driving conditions related sensor data. The rain sensor 111 may be configured to detect rainy conditions and intensity of rainfall while the light sensor 113 may comprise a lidar sensor operable to detect snow and water. In other examples, the light sensor 113 may also comprise an infrared sensor which detects water/ice on a road surface by measuring the radiance or reflectance of a road surface exposed to infrared radiation. Further, images captured by the camera module 115 may also be analysed to determine driving conditions for the vehicle. For example, the brightness content of the images captured by the camera module 115 may be used to ascertain if the vehicle is travelling in daylight or night time. The driver assistance unit 140 may detect that the vehicle is being driven in low light conditions if the brightness content of camera images as indicated by its LUX value falls below a predefined threshold value or through histogram analysis. In yet another example, the camera images may be used to detect the presence of falling raindrops and snow as well as adverse conditions on the road caused by snow, sleet or flooding through image recognition techniques and deep learning. It is to be appreciated that the environment module 110 may also comprise other types of environment sensors which are suitable for monitoring driving conditions as an alternative or in addition to the ones in the FIG. 1 implementation. For example, stereo-polarization cameras which detect such water hazards based on polarization and colour variation of reflected light may also be used.

In the FIG. 1 implementation, the environment module 110 is also in communication with a map database 120. The map database 120 stores detailed maps comprising road feature information associated with the vehicle external environment. Road feature information refers to information (e.g. location and dimensions) regarding one or more types of static or permanent objects on the road such as traffic lights, traffic signs, intersections, lane markings, road boundaries, road works, closed lanes and curbs. The processing unit 118 may be configured to retrieve road feature information corresponding to a specified geographical location and transmit it to the driver assistance unit 140 where it is added to a composite video which is then displayed to a driver of the vehicle. Alternatively, retrieved road feature information may also be featured in a composite video by having the processing unit 118 render it as part of a current representation.

In the FIG. 1 implementation, the current representation and driving conditions related sensor data are transmitted from the environment module 110 to the driver assistance unit 140. In other implementations, the current representation may also be generated by other modules associated with the vehicle and transmitted to the driver assistance unit. For example, the driver assistance unit 140 may also generate the current representation based on raw sensor data or processed sensor data such as object lists generated independently from each sensor or a combination of sensors. As described in detail below, the driver assistance unit 140 is operable to generate a composite video by combining a current representation with one or more static structure images from a stored video. As for the driving conditions related sensor data, it is used by the driver assistance unit 140 either alone or in combination with other sources of data to determine driving conditions associated with the vehicle external environment. In other implementations, driving conditions may also be determined based on other sources of information such as vehicle clocks (to determine if it is day or night) and weather reports instead of driving conditions related sensor data. In FIG. 1, the driver assistance unit 140 comprises a computing processor 142 and a hardware memory 144 in communication with the processor 142. The driver assistance unit 140 may, for example, be a general computing device and the processor 142 take the form of a central processing unit (CPU). Other computing processors, such as microcontrollers and graphics processing units (GPUs), which are capable of accessing the memory 144 to store information and execute instructions stored therein may also be used. In some implementations, the processor 142 and memory 144 may also be integrated on a single integrated circuit. The memory 144 stores information accessible by the processor 142 such as data and instructions which may be executed, stored, retrieved or otherwise used by the processor 142. For example, the driver assistance unit may generate a composite video based on instructions stored in the memory 144. It may also analyse driving conditions related sensor data from the environment module and determine if bad driving conditions exist based on instructions and threshold values stored in the memory 144. The memory may also function as a buffer which temporarily stores pre-fetched information such as stored videos which will subsequently be used by the processor 142. The memory 144 may comprise a non-transient memories (e.g. hard drive, flash memories, random-access memories), transient memories or a combination thereof.

The driver assistance unit 140 is also in communication with a localization module 160 which tracks the geographical location of the vehicle for example via Global Positioning System (GPS) or position estimation systems based on triangulation from a plurality of radio transmitters in a data communication system. The localization module 160 may also be operable to provide navigational functions by generating a driving route between a starting point and a destination selected by the driver as well as provide a list of the vehicle's projected geographical location if it travels along this predefined driving route.

The driver assistance module is also in communication with an image database 150 comprising a plurality of stored videos. Each stored video comprising one or more images of a vehicle external environment captured under good driving conditions (e.g. good visibility, static objects not obscured by water hazards) but processed such the one or more images only contain static objects. In this disclosure, we will refer to images which only contain static objects as static structure images. As discussed earlier, static objects refer to permanent and semi-permanent structures such as buildings, trees, lamp posts, road markings and construction sites and static hazards such as drains and potholes. Moving objects as well as temporarily stationary objects such as parked cars are considered as non-static objects. Non-static objects may be identified and removed from a video by extracting the motion vector (optical flow) of objects in the sequence of images forming the video. Other methods may also be used such as adapted background/foreground subtraction and deep learning techniques utilizing multiple video images which may be collected from different sources. The stored videos and preferably also the individual static structure images themselves are geotagged (i.e. encoded with metadata) or otherwise annotated with the geographical location associated with the one or more static structure images contained therein. In some implementations, the stored videos may also be tagged with information on the moving speed (if relevant) of the camera when the video was captured. The image database 150 may be located remotely from the driver assistance unit 140, for example, on a cloud server and communicate with the driver assistance unit through a wireless communication network such as a wide area network (WAN) or the Internet. The stored videos in the image database 150 may be derived from various sources including crowd sourcing and constantly updated to include new static objects that come into existence from time to time (e.g. fallen trees) or conversely remove static objects no longer in existence such as road works which have ceased and demolished structures.

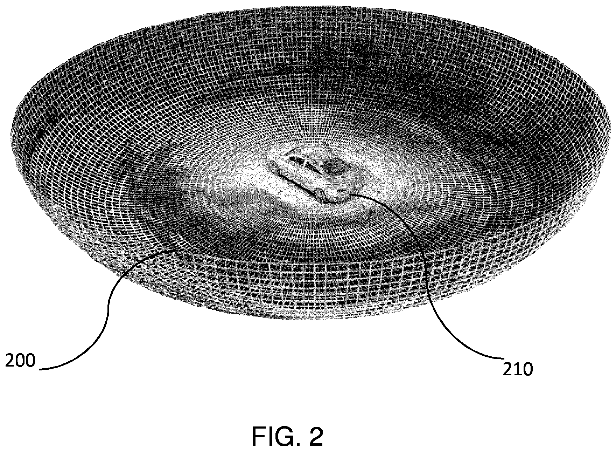

The driver assistance unit 140 is operable to generate a composite video comprising at least one composite image by combining a current representation of the vehicle external environment with a stored video from the image database 150. The current representation may comprise one or more images of objects in an external environment of the vehicle corresponding to the current geographical location of the vehicle (that is, sensor detected imagery of the external environment that the vehicle is actually passing through real time) or an object list of the same. The object list comprising a list of objects and information on the objects such as their co-ordinates, classification, geometry and other characteristics. The stored video, on the other hand, also has a geographical location matching the current geographical location of the vehicle but contains one or more static structure images of the vehicle external environment captured under good driving conditions. The one or more static structure images in each stored video are preferably encoded as an Image Texture in the image database 150. Upon receipt of a stored video, the driver assistance unit 140 decodes the Image Texture and renders each image on a 3D bowl-shaped mesh surface. FIG. 2 shows an example of a 3D mesh 200 associated with a surround view camera module 115 which provides a 360 degrees view around a vehicle. In this case, each image is projected 360 degrees around the mesh surface 200. The car 210 shown in the middle of the 3D mesh is a virtual vehicle. It is not essential that the static structure images in a stored video contain a 360 degrees view of the vehicle external environment. The stored video images may provide only a front facing view of 180 degrees or less. In this case, the images will not be projected 360 degrees around the 3D bowl-shaped mesh surface. Less computational resources will be required in order to process a stored video having a front facing view and overlay it on a current video compared to stored videos with a 360 degrees view.

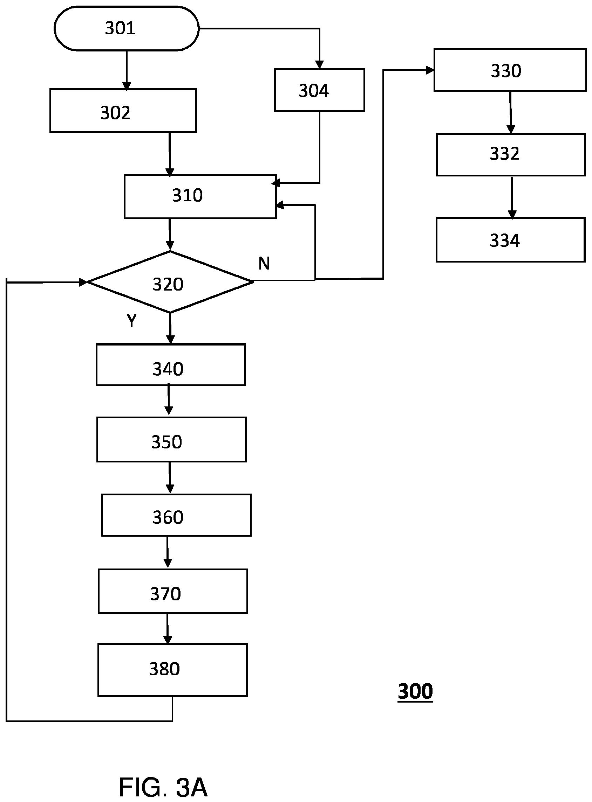

The driver assistance unit 140 may be triggered to generate a composite video by variety of scenarios. For example, in the implementation of FIG. 3A, it is triggered when an analysis of driving conditions related sensor data transmitted from the environment module 110 indicates that driving conditions associated with the vehicle's external environment are bad. Alternatively or additionally, the driver assistance unit 140 may also determine driving conditions based on other sources of information such as vehicle clocks (to determine if it is day or night time) and weather reports. The process for generating a composite video may also be initiated by other scenarios such as use of the localization module for navigation or upon a manual request by a driver of the vehicle. The rendering of one or more static structure images over a current representation advantageously assists in the driving of an own vehicle as the driver is able to "see" static obstacles which may not otherwise be visible or clear due to bad driving conditions. As discussed earlier, reliance on automotive sensors alone to guide a driver through bad driving conditions is not entirely satisfactory due to limitations in sensor capabilities. Bad driving conditions may be caused by factors such as poor visibility e.g. fog, low lighting conditions, and/or the presence of elements such as snow and water concealing static objects.

In some implementations of this disclosure, the driver assistance unit 140 may be operable to add processed sensor imagery such as traffic participant imagery generated by the environment module 110 and/or road feature information from the map database 120 to a composite video before displaying it to a driver as opposed to rendering them as part of a current representation of objects in the vehicle external environment. Finally, the driver assistance unit 140 transmits completed composite videos to the display module 180 where it is displayed to a driver of the vehicle, for example, via a vehicle heads up display or infotainment system. Other means of visual display associated with the display module 180 may also be suitable. For example, the video may also be transmitted to a pair of Google™ glasses or Virtual Reality (VR) headsets worn by the driver and shown on the display of such wearables. Displaying the composite video on such wearables advantageously allows the composite video to augment a driver's view when looking through the windscreen without the need for a heads up display which extends across the windscreen. Furthermore, such wearables can also be used to augment the driver's view of the external environment when he is looking out of the vehicle in other directions (e.g. through the rear window) without the need for a heads up display.

FIG. 3A is a flow chart 300 illustrating a method for assisting in the driving of a vehicle in accordance with an exemplary first mode of operation. Here the process for generating a composite video is initiated by the detection of bad driving conditions by a driver assistance unit such as the one shown in FIG. 1. In this implementation, stored videos each containing one or more static structure images are fetched based on the current geographical location of the vehicle instead projected geographical locations on a predefined driving route like the implementation of FIG. 5.

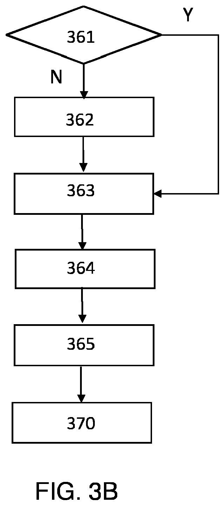

The process starts at block 301 and may be initiated by the switching on of the vehicle ignition or when the vehicle starts moving from a starting point. In block 302, starting of the process in block 301 activates the environment module 110 in FIG. 1 to collect driving conditions related information about the external environment of the vehicle and transmit the collected driving conditions related sensor data to the driver assistance unit 140. In the FIG. 1 implementation, the environment module 110 comprises environment sensors in the form of a rain sensor 111, a light sensor 113, a camera module 115 and a radar sensor 117. The environment module may also additionally or alternatively comprise other environment sensors such as lidar sensors, ultrasonic sensors, stereo-polarization cameras, infrared and/or em wave sensors. The start of the process in block 301 also triggers at least one environment sensor in the environment module 110 to start acquiring current sensor data of objects in the vehicle external environment if it is not already doing so. The processing unit 118 in the environment module also starts to generate current representations of objects in vehicle external environment based on the substantially real-time sensor data of objects acquired by the environment sensors. In the exemplary implementation illustrated in FIG. 3A and 3B, the current representation takes the form of a video comprising a plurality of images. In other implementations of this disclosure, the current representation may comprise only one image or take the form of an object list. The current representation in the FIG. 3A and B example may be generated based on a fusion of sensor data from a camera module and radar sensor such as that in FIG. 1. However, it is to be appreciated that other combinations of environment sensors capable of collecting sensor data and capturing current videos as described in this disclosure are also suitable. The current representation of objects may also be based on sensor data directly acquired by a sensor such as video images captured by a camera module. Driving conditions related sensor data and current representations of the vehicle external environment are transmitted from the environment module 110 to the driver assistance unit 140. It is to be appreciated that in other implementations of this disclosure, the current representation may also be generated by other modules associated with the vehicle such as the driver assistance unit itself. In such instances, output from the environment module may include raw sensor data or processed sensor data such as object lists.

At block 310, the driver assistance unit 140 calculates driving conditions associated with the vehicle's external environment based on driving conditions related sensor data from the environment module 110. In some implementations, the driver assistance unit 140 may alternatively or additionally rely on other sources of information such as vehicle clocks (to determine if it is day or night time) and weather reports to determine driving conditions. Driving conditions may be assessed based on parameters such as whether it is day or night time, luminance level, visibility level, whether there are any water hazards such as flooding, ice or snow which may conceal the presence of road markings, traffic signs as well as hazards such as curbs, potholes and open drains.

The driver assistance unit 140 then determines at decision block 320 whether the driving conditions for the vehicle are considered as bad. The driver assistance unit may make this determination by comparing the calculated driving conditions with predetermined threshold values stored in the memory 144 of the driver assistance unit 140. The driver assistance unit 140 may determine that driving conditions are bad if the calculated driving conditions exceed a first threshold value. In some implementations, the driver assistance unit 140 may further classify the severity of bad driving conditions based on whether the calculated value exceed further threshold limits. For example, driving conditions which exceed the first threshold value but fall below a second threshold value may be considered as poor, those which exceed the second threshold value but are less than a third threshold value may be classified as very poor and so on. In some implementations, at least the first threshold value may also vary depending on the identity of the driver. For example, some drivers may have poorer vision and/or are less skilled in driving than others and as such be more easily affected by adverse driving conditions. Further, the first and other threshold values may also vary depending on the physiological state of a driver during each trip as detected by devices such as an internal camera and monitoring devices worn by a driver.

If the driver assistance unit determines at block 320 that driving conditions for the vehicle are not considered as bad, the process goes back to block 310 where the driver assistance unit repeats the process of receiving and analysing incoming driving conditions related sensor data from the environment module 110 followed by determining in block 320 if bad driving conditions exist. This process is repeated so long as the car ignition is switched on or until bad driving conditions are detected. In an optional implementation of this disclosure, if it is determined at block 320 that bad driving conditions do not exist, the driver assistance unit initiates an algorithm to extract and store one or more static structure images from current representations. The process begins at block 330 where the images in a current representation are processed by an algorithm for extracting static structure images. As discussed above, optical flow or adapted background/foreground subtraction methods or deep learning may be used to distinguish between static objects and non-static objects such pedestrians or vehicles in the current representation. The incoming images in the current representation may also be subjected to additional image processing steps such as processes for removing artefacts such as shadows or reflections. In block 332, the current representation is compressed. Further, the current representation and optionally the individual images in the current representation are also geotagged or otherwise annotated with the geographical location where the video was taken. In some implementations, the current representation may additionally be annotated with information on the velocity of changing landscape associated with the images in current representation. This may be taken to be the speed of the vehicle if the current representation comprises imagery taken by at least one environment sensor mounted on the vehicle. In block 334 the compressed video is stored in the image database 150 either as a new stored video or used to update an existing stored video. This process advantageously updates the image database with more recent information on static structures such as addition of new road works or road hazards and removal of the same if they are no longer in existence.

Going back to block 320, if the driver assistance unit 140 determines that driving conditions are bad, the process goes on to block 340 where the driver assistance unit retrieves the current geographical location of the vehicle from the localization module 160. The localization module 160 may track the location of the vehicle via GPS or other position estimation systems.

In block 350, the driver assistance unit retrieves a stored video having a geographical location matching the current geographical location of the vehicle. A geographical location which considered as matching when the latitudinal and longitudinal co-ordinates associated with the retrieved stored video is substantially the same as the current location of the vehicle. The stored video comprises at least one static structure image. The stored video may be retrieved real time from the image database 150 or from a buffer which situated in for example, the memory 144 of the driver assistance unit or stored in a cloud server. In the latter case, the stored video would have been pre-fetched and stored in the buffer before the vehicle arrives at the current geographical location. This may be accomplished by looking ahead to the next traffic junction from the current road that a vehicle is travelling on and pre-fetching from the image database, a plurality of stored videos corresponding to all the roads leading out from that next traffic junction. The stored video corresponding to the road the driver eventually takes at that next junction is then used to generate a composite video while those corresponding to other roads at the same junction are deleted from the buffer. Pre-fetching stored videos and storing them in a buffer advantageously reduces the lag time for generating a composite video.

At block 360, the driver assistance unit 140 generates a composite video by overlying a current representation with at least one static structure image from the stored video retrieved in block 350. The current representation is generated based on substantially real-time sensor data of objects in the vehicle external environment acquired by one or more environment sensors in the environment module. That is, sensor detected imagery of the external environment that the vehicle is actually passing through real time. In the FIG. 3A and 3B example, the current representation is a video comprising a plurality of images. The images may be derived by combining visual and radar sensor data acquired by the camera module 115 and radar sensor 117 in FIG. 1. This fused imagery may be generated by low or high level fusion of sensor data from the camera module 115 and radar sensor 117 or a combination thereof. For example, the processing unit 118 may comprise sensor fusion capabilities and be configured to identify traffic participants based on a fusion of the camera module and radar sensor data. The extracted information on traffic participants may then be combined with vision imagery coming from camera module 115 and rendered as a current representation of objects in the vehicle external environment.

The detailed steps for generating a composite image are illustrated in FIG. 3B. In decision block 361, driver assistance unit 140 checks if the perspective view of the stored video corresponds to the perspective view of the current representation. If the perspective views of both are the same, the process goes to block 363. If the two perspective views do not correspond, the process goes to block 362 where the perspective view of the one or more static structure images in the stored video are adjusted so that they match that of the images in the current representation. In some implementations, the images in the stored video are saved as Image Texture. The texture mapping unit (TMU) component of a GPU in the driver assistance unit 140 rotates the 3D bowl mesh associated with each stored video image such as the one shown in FIG. 2 so that the perspective view corresponds to that of the current representation. In block 363, the driver assistance unit 140 allocates to the respective images in the current representation, a static structure image from the stored video. The allocation may be based on similarity in geographical location if the images in each video are individually annotated with geographical location, or based on feature similarity. The paired images are then aligned using for example representative features present in both images or through correlation techniques. In other implementations where the current representation is in the form of an object list, the coordinates for the object list and/or static structure images may be transformed to a common coordinate system so as to map the objects in the object list onto the static structure image space.

In block 364, the velocity of the changing landscape in the stored video is compared with the same for the current representation. Depending on the difference (if any) in velocity of changing landscape between the two videos, one or more of the static structure images from the stored video may be disregarded from and/or repeated in the generation of the composite video. Additionally or alternatively, the rendering rate of the static structure images may also be adjusted. For example, if the velocity of changing landscape for the current representation (which is equivalent to the vehicle velocity if onboard sensors are used for capturing the current video) is much higher, static structure images from the stored video may be rendered at a high FPA or one or more static structure images disregarded from the making of the composite video. In some implementations, it may be possible to only have alternate static structure image frames in a stored video form part of the composite video without much loss of information thereby reducing processing demands associated with composite video generation. On the other hand, if the velocity for the current representation is much slower (e.g. the landscape in the current video does not change very often), then one or more of the static structure images may be repeated or the static structure images rendered at a low FPS. The velocity of changing landscape in the stored video or the moving speed of the camera when the video was taken may be annotated to the stored video. As for the velocity of changing landscape in the current representation, it may be the speed of the vehicle when the video was taken. Other methods such as optical flow may also be used to determine the velocity of changing landscape associated with the current and stored video.

In block 365, the current representation is overlaid with one or more static structure images. The transparency level of pixels in the one or more static structure images from the stored video being overlaid may be varied depending on driving conditions for the vehicle as determined in block 320. In general, the static structure images needs to be more visible to the driver and its pixels less transparent as the driving condition worsens. In some implementations, objects in the static structure images may additionally or alternatively be displayed in eye catching or unconventional colours such as radium colours so that they are more noticeable to the driver.

In block 370, road feature information about the vehicle external environment at the current geographical location of the vehicle is added to the composite video. Road feature information may originate from a map database 120 and be transmitted directly to the driver assistance unit 140 or via the environment module 110. Road feature information refers to information (e.g. location and dimensions) regarding one or more types of static or permanent objects on the road such as traffic lights, traffic signs, intersections lane markings, road boundaries, road works, closed lanes and curbs. In other implementations of this disclosure not illustrated in FIG. 3A, such road feature information may be combined with imagery derived based on environment sensor data and rendered as part of a current representation output by the environment module.

In block 380, the driver assistance unit 140 transmits the composite video with the added road feature information from the image database to the display module 180 where it is displayed to driver of the vehicle via for example, a heads-up display, infotainment system display or wearables such as Google™ glasses and VR headsets. In another implementation (not shown), road feature information from the image database 120 may not form part of the composite video. After block 380, the process returns to block 320 where the driver assistance unit 140 checks if bad driving conditions still exist. If they still exist, then steps 340-380 are repeated for an updated current geographical location of the vehicle. If bad driving conditions do not exist then the process goes to block 310 where the driver assistance unit 140 continues to check for bad driving conditions until for example the vehicle ignition is switched off or the process is otherwise deactivated.

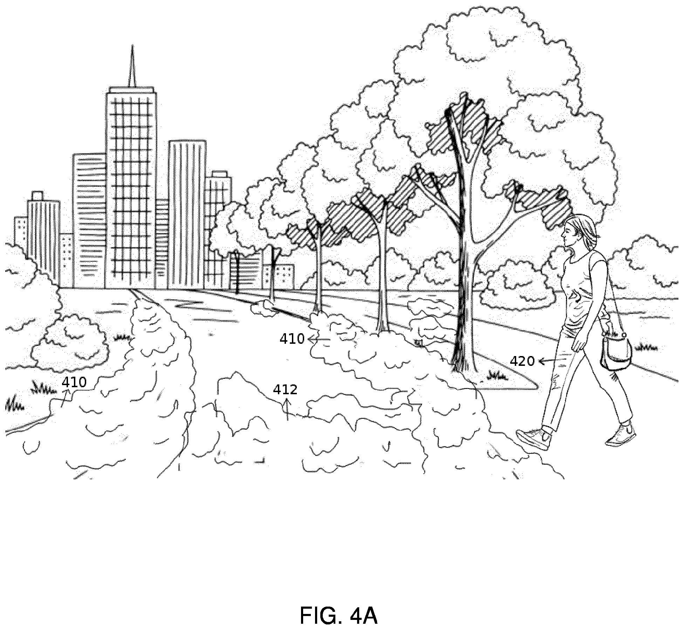

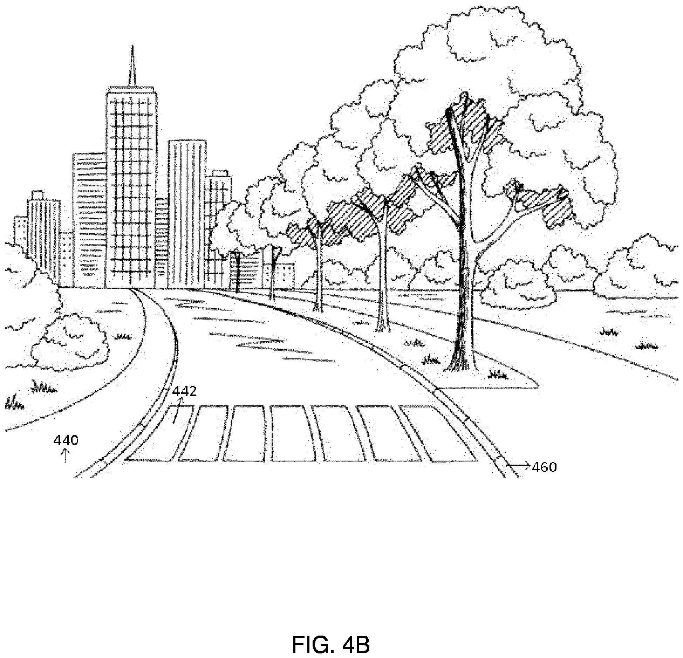

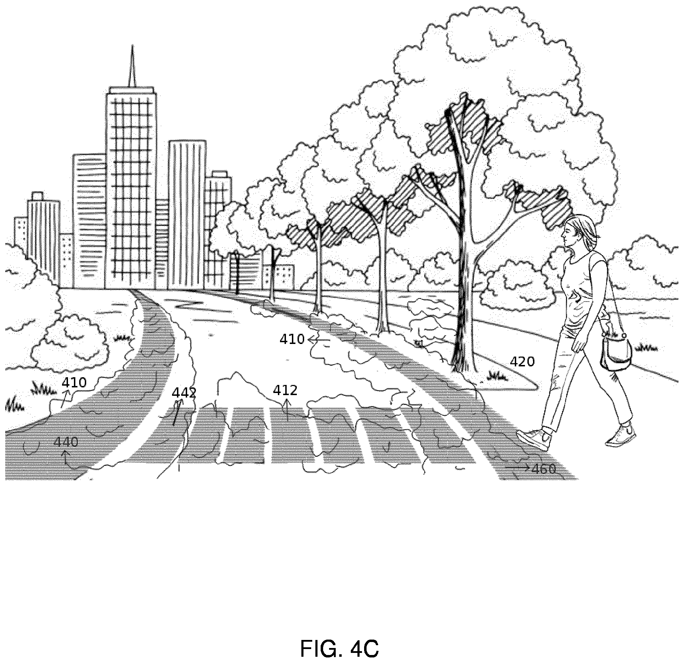

FIGS. 4A-4C respectively provide an exemplary illustration of an image from a current representation of objects in an external environment of the vehicle, a static structure image from a stored video combined with road feature information from a map database and a composite image formed by overlaying the FIG. 4A current image from a current representation with the image in FIG. 4B. The image shown in FIG. 4A comprises features 410 and 412 taken from the camera module 115 sensor data and traffic participant information extracted from a fusion of data from the camera module 115 and the radar sensor 117. 410 is snow covering the sidewalk, 412 is snow covering a section of the road and 420 is a traffic participant in the form of a pedestrian. The static structure image in FIG 4B comprises a drain 440 and a pedestrian crossing 442, both of which are concealed by snow (410, 412) in the FIG. 4A current image from a current representation. The concealed drain 440 represents a potential hazard to a driver. Road feature information in the form of a curb 460 is also illustrated in FIG. 4B. Apart from the static structure image, the pedestrian crossing 442 may also be present in the road feature information. A composite image comprising the current image in FIG. 4A overlaid with the static structure image and road feature information (both shown in shaded form) in FIG. 4B is illustrated in FIG. 4C.

In a second mode of operation (not shown), the stored videos may be pre-fetched when the driver enters a destination and a predefined driving route is generated by a localization module based on the starting point and destination. The driver assistance unit 140 may then instruct the localization module 160 to retrieve and transmit to the driver assistance unit 140, the projected geographical locations of the vehicle based on the predefined driving route. The driver assistance unit 140 goes on to pre-fetch from the image database 150 a plurality of stored videos with geographical locations matching the projected geographical locations of the vehicle and stores them in a buffer in the memory 144. Alternatively, the driver assistance unit 140 may also pre-fetch stored videos for a portion of the projected geographical locations and pre-fetch the remaining ones during the course of the trip. In such instances, stored videos having a geographical location matching the current geographical location of the vehicle are subsequently retrieved from the buffer instead of the image database which in general tends to reduce processing time.

In a third mode of operation (not shown), the driver assistance unit may be operable to cater for situations where a driver of the vehicle decides to deviate from the predefined driving route while driving. In this case, the driver assistance unit may be operable to automatically switch to a real time fetching mode like the one illustrated in FIG. 3A upon detecting that the actual geographical location of the vehicle deviates from that proposed by the predefined driving route. For example, when the driver makes a different turning from the one proposed by the predefined route. In another variation, the process for generating and displaying a composite image may also initiated by a manual request from the driver. It is to be appreciated that the above examples of using the driver assistance unit are not intended to be limiting on the scope of this disclosure. Other modes of operating the driver assistance unit to generate a composite video not discussed herein may also possible.

## Claims

1. A method for assisting in the driving of a vehicle comprising:
receiving, by a driver assistance unit (140), a current geographical location of the vehicle;
providing a current representation of objects in an external environment of the vehicle based on substantially real-time sensor data of objects acquired by an environment module comprising one or more environment sensors (111, 113, 115, 117) the current representation corresponding to the current geographical location of the vehicle;
retrieving, by the driver assistance unit, a stored video comprising at least one static structure image of the vehicle external environment, the stored video having a geographical location matching the current geographical location of the vehicle;
generating, by the driver assistance unit, a composite video comprising combining the current representation with the at least one static structure image in the stored video;
receiving, by the driver assistance unit, driving conditions related sensor data about the vehicle external environment that is acquired by the environment module (110); and
determining, by the driver assistance unit, driving conditions associated with the vehicle external environment based at least partially on the driving conditions related sensor data, **characterized in that**
generating the composite video further comprises adjusting the transparency level of the one or more static structure images based on the driving conditions;
and
displaying the composite video to a driver of the vehicle.

2. The method according to any of the preceding claims further comprising
determining, by the driver assistance unit, if the driving conditions are bad; and
wherein the driver assistance unit initiates the retrieving of the stored video in response to the driving conditions being determined as bad.

3. The method according to any of claims 1-2 further comprising classifying the driving conditions according to a plurality of categories based on the sensor data.

4. The method of claim 1 further comprising
determining, by the driver assistance unit, if the driving conditions are bad; and
where the current representation comprises at least one image, the driver assistance unit initiates an algorithm for extracting one or more static structure images from the current video in response to the driving conditions not being determined as bad.

5. The method of claim 4 further comprising annotating the one or more extracted static structure images with the geographical location associated with the current representation from which the extracted static structure images originate and storing the extracted static structure images in an image database.

6. The method according to any of the preceding claims wherein the stored video comprises a plurality of static structure images and the current representation comprises a plurality of images and generating the composite video further comprises:
comparing the velocity of changing landscape associated with the current representation and the stored video; and
determining based on any difference in velocity whether to do at least one of adjusting a rendering rate of the static structure images from the stored video, repeating and/or disregarding one or more of the static structure images in the stored video from the generation of the composite video.

7. The method according to any of the preceding claims, wherein generating the composite video further comprises
checking if the perspective view of the one or more static structure images in the stored video correspond to the perspective view of the current representation; and
adjusting the perspective view of the one or more static structure images to the perspective view of the current representation if they do not correspond.

8. The method of claim 1 wherein the stored video is retrieved from a buffer comprising a plurality of videos having a geographical location matching a projected geographical location of the vehicle based on a predefined driving route.

9. The method according to any of the preceding claims wherein the current representation comprises information on traffic participants in the vehicle external environment.

10. The method according to any of the preceding claims further comprising retrieving road feature information from a map database and featuring the road feature information as part of the composite video.

11. A driver assistance unit (140) for a vehicle comprising:
a processor (142) ;
at least one memory (144) coupled to the processor and storing instructions executable by the processor causing the processor to:
receive a current geographical location of the vehicle;
receive or generate a current representation of objects in an external environment of the vehicle based on substantially real-time sensor data of objects acquired by an environment module comprising one or more environment sensors, the current representation corresponding to the current geographical location of the vehicle;
retrieve a stored video comprising at least one static structure image of the vehicle external environment, the stored video having a geographical location matching the current geographical location of the vehicle;
generate a composite video comprising combining the current representation with the at least one static structure image in the stored video;
receive driving conditions related sensor data about the vehicle external environment that is acquired by the environment module; and
determine driving conditions associated with the vehicle external environment based at least partially on the driving conditions related sensor data, **characterized in that**
generating the composite video further comprises adjusting the transparency level of the one or more static structure images based on the driving conditions;
and
cause the display of the composite video to a driver of the vehicle.

12. The driver assistance unit of claim 11, wherein the at least one memory further causes the processor to:
determine if the driving conditions are bad; and
initiate the retrieving of the stored video in response to the driving conditions being determined as bad.

13. The driver assistance unit of claim 11, wherein the composite video comprises information on traffic participants in the vehicle external environment and road feature information.

## Patentansprüche

1. Verfahren zur Unterstützung beim Fahren eines Fahrzeuges, umfassend:
Empfangen, durch eine Fahrerassistenzeinheit (140), einer aktuellen geografischen Lage des Fahrzeuges;
Bereitstellen einer aktuellen Darstellung von Objekten in einer externen Umgebung des Fahrzeuges auf der Grundlage von im Wesentlichen Echtzeitsensordaten von Objekten, die durch ein Umgebungsmodul erfasst werden, das einen oder mehrere Umgebungssensoren (111, 113, 115, 117) umfasst, wobei die aktuelle Darstellung der aktuellen geografischen Lage des Fahrzeuges entspricht;
Abrufen, durch die Fahrerassistenzeinheit, eines gespeicherten Videos, das mindestens ein Bild einer bewegungslosen Struktur der externen Umgebung des Fahrzeuges umfasst, wobei das gespeicherte Video eine geografische Lage aufweist, die mit der aktuellen geografischen Lage des Fahrzeuges übereinstimmt;
Erzeugen, durch die Fahrerassistenzeinheit, eines zusammengesetzten Videos, das das Kombinieren der aktuellen Darstellung mit dem mindestens einen Bild einer bewegungslosen Struktur in dem gespeicherten Video umfasst;
Empfangen, durch die Fahrerassistenzeinheit, von mit Fahrbedingungen in Beziehung stehenden Sensordaten über die externe Umgebung des Fahrzeuges, die durch das Umgebungsmodul (110) erfasst werden; und
Bestimmen, durch die Fahrerassistenzeinheit, von mit der externen Umgebung des Fahrzeuges zusammenhängenden Fahrbedingungen zumindest teilweise auf der Grundlage der mit Fahrbedingungen in Beziehung stehenden Sensordaten, **dadurch gekennzeichnet, dass**
das Erzeugen des zusammengesetzten Videos ferner das Anpassen des Lichtdurchlässigkeitsgrades des einen oder der mehreren Bilder von bewegungslosen Strukturen auf der Grundlage der Fahrbedingungen umfasst;
und
Anzeigen, einem Fahrer des Fahrzeuges, des zusammengesetzten Videos.

2. Verfahren nach einem der vorangehenden Ansprüche, ferner umfassend
das Bestimmen, durch die Fahrerassistenzeinheit, ob die Fahrbedingungen schlecht sind; und
wobei die Fahrerassistenzeinheit das Abrufen des gespeicherten Videos als Antwort darauf, dass die Fahrbedingungen als schlecht bestimmt werden, initiiert.

3. Verfahren nach einem der Ansprüche 1 bis 2, ferner umfassend das Klassifizieren der Fahrbedingungen gemäß einer Mehrzahl von Kategorien auf der Grundlage der Sensordaten.

4. Verfahren nach Anspruch 1, ferner umfassend
das Bestimmen, durch die Fahrerassistenzeinheit, ob die Fahrbedingungen schlecht sind; und
wo die aktuelle Darstellung mindestens ein Bild umfasst, initiiert die Fahrerassistenzeinheit einen Algorithmus zum Extrahieren eines oder mehrerer Bilder von bewegungslosen Strukturen aus dem aktuellen Video als Antwort darauf, dass die Fahrbedingungen nicht als schlecht bestimmt werden.

5. Verfahren nach Anspruch 4, ferner umfassend das Vermerken der geografischen Lage, die mit der aktuellen Darstellung, aus der die extrahierten Bilder von bewegungslosen Strukturen stammen, zusammenhängt, auf dem einen oder den mehreren extrahierten Bildern von bewegungslosen Strukturen und das Speichern der extrahierten Bilder von bewegungslosen Strukturen in einer Bilderdatenbank.

6. Verfahren nach einem der vorangehenden Ansprüche, wobei das gespeicherte Video eine Mehrzahl von Bildern von bewegungslosen Strukturen umfasst und die aktuelle Darstellung eine Mehrzahl von Bildern umfasst und das Erzeugen des zusammengesetzten Videos ferner umfasst:
Vergleichen der Geschwindigkeit der sich veränderten Landschaft, die mit der aktuellen Darstellung und dem gespeicherten Video zusammenhängt; und
Bestimmen, auf der Grundlage einer etwaigen Geschwindigkeitsdifferenz, ob mindestens eines der Folgenden zu tun ist: Anpassen einer Wiedergabegeschwindigkeit der Bilder von bewegungslosen Strukturen aus dem gespeicherten Video, Wiederholen und/oder Nichtberücksichtigen eines oder mehrerer der Bilder von bewegungslosen Strukturen in dem gespeicherten Video bei der Erzeugung des zusammengesetzten Videos.

7. Verfahren nach einem der vorangehenden Ansprüche, wobei das Erzeugen des zusammengesetzten Videos ferner umfasst
das Überprüfen, ob die perspektivische Ansicht des einen oder der mehreren Bilder von bewegungslosen Strukturen in dem gespeicherten Video der perspektivischen Ansicht der aktuellen Darstellung entspricht; und
das Anpassen der perspektivischen Ansicht des einen oder der mehreren Bilder von bewegungslosen Strukturen an die perspektivische Ansicht der aktuellen Darstellung, falls sie nicht einander entsprechen.

8. Verfahren nach Anspruch 1, wobei das gespeicherte Video aus einem Zwischenspeicher abgerufen wird, der eine Mehrzahl von Videos umfasst, die eine geografische Lage aufweisen, die mit einer prognostizierten geografischen Lage des Fahrzeuges auf der Grundlage einer vordefinierten Fahrstrecke übereinstimmt.

9. Verfahren nach einem der vorangehenden Ansprüche, wobei die aktuelle Darstellung Informationen über Verkehrsteilnehmer in der externen Umgebung des Fahrzeuges umfasst.

10. Verfahren nach einem der vorangehenden Ansprüche, ferner umfassend das Abrufen von Straßenmerkmalsinformationen aus einer Kartendatenbank und das Zeigen der Straßenmerkmalsinformationen als Teil des zusammengesetzten Videos.

11. Fahrerassistenzeinheit (140) für ein Fahrzeug, umfassend:
einen Prozessor (142);
mindestens einen Speicher (144), der an den Prozessor gekoppelt ist und Befehle, die durch den Prozessor ausführbar sind, speichert, die bewirken, dass der Prozessor:
eine aktuelle geografische Lage des Fahrzeuges empfängt;
eine aktuelle Darstellung von Objekten in einer externen Umgebung des Fahrzeuges auf der Grundlage von im Wesentlichen Echtzeitsensordaten von Objekten, die durch ein Umgebungsmodul erfasst werden, das einen oder mehrere Umgebungssensoren umfasst, empfängt oder erzeugt, wobei die aktuelle Darstellung der aktuellen geografischen Lage des Fahrzeuges entspricht;
ein gespeichertes Video abruft, das mindestens ein Bild einer bewegungslosen Struktur der externen Umgebung des Fahrzeuges umfasst, wobei das gespeicherte Video eine geografische Lage aufweist, die mit der aktuellen geografischen Lage des Fahrzeuges übereinstimmt;
ein zusammengesetztes Video erzeugt, das das Kombinieren der aktuellen Darstellung mit dem mindestens einen Bild einer bewegungslosen Struktur in dem gespeicherten Video umfasst;
mit Fahrbedingungen in Beziehung stehende Sensordaten über die externe Umgebung des Fahrzeuges, die durch das Umgebungsmodul erfasst werden, empfängt; und
mit der externen Umgebung des Fahrzeuges zusammenhängende Fahrbedingungen zumindest teilweise auf der Grundlage der mit Fahrbedingungen in Beziehung stehenden Sensordaten bestimmt, **dadurch gekennzeichnet, dass**
das Erzeugen des zusammengesetzten Videos ferner das Anpassen des Lichtdurchlässigkeitsgrades des einen oder der mehreren Bilder von bewegungslosen Strukturen auf der Grundlage der Fahrbedingungen umfasst;
und
bewirkt, dass das zusammengesetzte Video einem Fahrer des Fahrzeuges angezeigt wird.

12. Fahrerassistenzeinheit nach Anspruch 11, wobei der mindestens eine Speicher ferner bewirkt, dass der Prozessor:
bestimmt, ob die Fahrbedingungen schlecht sind; und
das Abrufen des gespeicherten Videos als Antwort darauf, dass die Fahrbedingungen als schlecht bestimmt werden, initiiert.

13. Fahrerassistenzeinheit nach Anspruch 11, wobei das zusammengesetzte Video Informationen über Verkehrsteilnehmer in der externen Umgebung des Fahrzeuges und Straßenmerkmalsinformationen umfasst.

## Revendications

1. Procédé d'assistance pour la conduite d'un véhicule comprenant :
recevoir un emplacement géographique actuel du véhicule par une unité d'aide à la conduite (140) ;
fournir une représentation actuelle d'objets dans un environnement extérieur du véhicule basé sur des données de capteurs, essentiellement en temps réel, relatives à des objets, acquises par un module d'environnement comprenant un ou plusieurs capteurs d'environnement (111, 113, 115, 117), la représentation actuelle correspondant à l'emplacement géographique actuel du véhicule ;
récupérer, par l'unité d'aide à la conduite, une vidéo enregistrée comprenant au moins une image de structures statiques de l'environnement extérieur du véhicule, la vidéo enregistrée ayant un emplacement géographique correspondant à l'emplacement géographique actuel du véhicule ;
générer, par l'unité d'aide à la conduite, une vidéo composite comprenant combiner la représentation actuelle avec l'au moins une image de structures statiques dans la vidéo enregistrée ;
recevoir, par l'unité d'aide à la conduite, des données de capteurs se rapportant à des conditions de conduite sur l'environnement extérieur du véhicule qui sont acquises par le module d'environnement (110) ; et
déterminer, par l'unité d'aide à la conduite, des conditions de conduite associées avec l'environnement extérieur du véhicule basé au moins partiellement sur les données de capteurs se rapportant aux conditions de conduite, **caractérisé en ce que**
générer la vidéo composite comprend en outre l'ajustement du niveau de transparence des une ou plusieurs images de structures statiques basé sur les conditions de conduite ; et
afficher la vidéo à l'attention d'un conducteur du véhicule.

2. Procédé selon l'une quelconque des revendications précédentes, comprenant en outre
déterminer, par l'unité d'aide à la conduite, si les conditions de conduite sont mauvaises ; et
l'unité d'aide à la conduite déclenchant la récupération de la vidéo enregistrée en réponse à la détermination des conditions de conduite comme étant mauvaises.

3. Procédé selon l'une quelconque des revendications 1-2 comprenant en outre classer les conditions de conduite en fonction d'une pluralité de catégories basé sur les données de capteurs.

4. Procédé selon la revendication 1, comprenant en outre
déterminer, par l'unité d'aide à la conduite, si les conditions de conduite sont mauvaises ; et
lorsque la représentation actuelle comprend au moins une image, l'unité d'aide à la conduite déclenchant un algorithme pour extraire une ou plusieurs images de structures statiques de la vidéo actuelle en réponse à la détermination des conditions de conduite comme n'étant pas mauvaises.

5. Procédé selon la revendication 4 comprenant en outre attribuer aux images de structures statiques extraites l'emplacement géographique associé à la représentation actuelle dont les images de structures statiques extraites proviennent et enregistrer les images de structures statiques extraites dans une base de données d'images.

6. Procédé selon l'une quelconque des revendications précédentes, la vidéo enregistrée comprenant une pluralité d'images de structures statiques et la représentation actuelle comprenant une pluralité d'images, et générer la vidéo composite comprenant en outre :
comparer la vitesse du changement de paysage associée à la représentation actuelle et la vidéo enregistrée ; et
déterminer, basé sur une quelconque différence de vitesse, s'il est nécessaire d'exécuter au moins une action parmi ajuster un taux de rendu des images de structures statiques de la vidéo enregistrée, répéter et/ou ignorer une ou plusieurs images de structures statiques de la vidéo enregistrée lors de la génération de la vidéo composite.

7. Procédé selon l'une quelconque des revendications précédentes, la génération de la vidéo composite comprenant en outre
vérifier si la vue en perspective des une ou plusieurs images de structures statiques dans la vidéo enregistrée correspond à la vue en perspective de la représentation actuelle ; et
ajuster la vue en perspective des une ou plusieurs images de structures statiques sur la vue en perspective de la représentation actuelle si elles ne correspondent pas.

8. Procédé selon la revendication 1, la vidéo enregistrée étant récupérée à partir d'une mémoire tampon comprenant une pluralité de vidéos ayant un emplacement géographique correspondant à un emplacement géographique projeté du véhicule basé sur un itinéraire de conduite prédéfini.

9. Procédé selon l'une quelconque des revendications précédentes, la représentation actuelle comprenant des informations sur les usagers de la route dans l'environnement extérieur du véhicule.

10. Procédé selon l'une quelconque des revendications précédentes, comprenant en outre récupérer des informations de caractéristiques de route à partir d'une base de données cartographique et faire figurer les caractéristiques de route comme partie de la vidéo composite.

11. Unité d'aide à la conduite (140) pour un véhicule, comprenant :
un processeur (142) ;
au moins une mémoire (144) couplée au processeur et enregistrant des instructions exécutables par le processeur commandant au processeur de :
recevoir un emplacement géographique actuel du véhicule ;
recevoir ou générer une représentation actuelle d'objets dans un environnement extérieur du véhicule basé sur des données de capteur, essentiellement en temps réel, relatives à des objets, acquises par un module d'environnement comprenant un ou plusieurs capteurs d'environnement, la représentation actuelle correspondant à l'emplacement géographique actuel du véhicule ;
récupérer une vidéo enregistrée comprenant au moins une image de structures statiques de l'environnement extérieur du véhicule, la vidéo enregistrée ayant un emplacement géographique correspondant à l'emplacement géographique actuel du véhicule ;
générer une vidéo composite comprenant combiner la représentation actuelle avec l'au moins une image de structures statiques dans la vidéo enregistrée ;
recevoir des données de capteur se rapportant à des conditions de conduite sur l'environnement extérieur du véhicule qui sont acquises par le module d'environnement ; et
déterminer des conditions de conduite associées avec l'environnement extérieur du véhicule basé au moins partiellement sur les données de capteur se rapportant aux conditions de conduite, **caractérisé en ce que**
générer la vidéo composite comprend en outre l'ajustement du niveau de transparence des une ou plusieurs images de structures statiques basé sur les conditions de conduite ;
et
déclencher l'affichage de la vidéo à l'attention d'un conducteur du véhicule.

12. Unité d'aide à la conduite selon la revendication 11, l'au moins une mémoire commandant en outre au processeur de :
déterminer si les conditions de conduite sont mauvaises ; et
déclencher la récupération de la vidéo enregistrée en réponse à la détermination des conditions de conduite comme étant mauvaises.

13. Unité d'aide à la conduite selon la revendication 11, la vidéo composite comprenant des informations sur les usagers de la route dans l'environnement extérieur du véhicule et des informations de caractéristiques de route.
